# EUROPEAN PATENT SPECIFICATION

(11) **EP 3 033 935 B1**
(45) Date of publication and mention of the grant of the patent: **19.07.2017**
(21) Application number: 15199630.3
(22) Date of filing: 11.12.2015
(51) Int. Cl.: A01D 34/76

(54) **LAWN MOWER WITH A QUICK CONNECTION APPARATUS FOR AN ACCESSORY OF THE LAWN MOWER**
RASENMÄHER MIT EINER SCHNELLVERBINDUNGSVORRICHTUNG FÜR EIN ZUBEHÖRTEIL DES RASENMÄHERS
TONDEUSE À GAZON COMPRENANT UN APPAREIL DE CONNEXION RAPIDE DESTINÉ À UN ACCESSOIRE DE LA TONDEUSE

(30) Priority: 16.12.2014 IT MI20142155
(43) Date of publication of application: 22.06.2016
(73) Proprietor: GGP Italy S.p.A., 31033 Castelfranco Veneto (TV) (IT)
(72) Inventor: DAL LAGO, Dario, 31039 RIESE PIO X TV (IT); GAMBALONGA, Leonardo, 35010 MASSANZAGO PD (IT); BASTASIN, Franco, 31100 TREVISO (IT)
(74) Representative: Mittler, Andrea

(56) References cited:
- DE-U1- 20 307 480
- US-A- 3 283 486
- US-A- 3 965 657
- US-A- 4 558 558
- US-A- 5 865 020

## Description

The present invention relates to a quick connection apparatus for an accessory of a lawn mower.

In the prior art, connection apparatuses for frontal accessories of lawn mowers are known comprising power take offs of the lawn mower to transmit power to at least one accessory frontally connected to the lawn mower, wherein said accessory may be a further blade system of the lawn mower, as described in US-6651413-B2 for example, where removing the accessory is disadvantageously complicated and slow.

US-7363759-B2 describes a connection apparatus for a frontal accessory of the lawn mower comprising a power take off of the lawn mower which transmits power to the frontal accessory which is adapted to pass from a working position to a lifted position which is raised with respect to a working surface. Disadvantageously, changing the accessory by replacing it with another one is difficult and the accessory is difficult to replace.

US-3965657 describes a power take off of a lawn mower comprising a first pulley keyed onto a motor axis connected to a motor which transmits a rotary movement to said first pulley. The power take off further comprises a second and a third return pulleys keyed together on a return axis. Said first and second pulleys are connected by a first transmission belt of the power take off. Said first transmission belt is maintained taut by said first fixed tensioner. The power take off further comprises a fourth pulley keyed onto an axis of an accessory. Said third and fourth pulleys are connected in transmission by second transmission belt which is maintained taut by a second tensioner adapted to pass from a first position to maintain the second belt taut and allow the transmission of power to a second position, which does not allow the transmission of power. Said second tensioner passes from the first to the second position by means of leverages.

It is the object of the present invention to make a quick connection apparatus for an accessory of a lawn mower which is easy and quick to fit and to remove, quickly and easily interchangeable with other accessories of the lawn mower, is capable of rapidly and simply activating and deactivating the accessory without influencing the operation of the blades of the lawn mower, is capable of being safely, simply and rapidly transported, is of simple and rapid use and is maneuverable in simple and safe manner.

According to the invention, such an object is achieved by a lawn mower comprising a quick connection apparatus for an accessory of a lawn mower according to claim 1.

These and other features of the present invention will be more apparent from the following detailed description of a practical embodiment thereof, shown by way of non-limitative example in the accompanying drawings, in which:
Figure 1 shows a perspective view of a quick connection apparatus of a lawn mower mounted on a base of a frame of the lawn mower in a working position;
Figure 2 shows a plan view from the side of the quick connection of the lawn mower mounted on the base of the frame in the working position;
Figure 3 shows a plan view from the side of the quick connection of the lawn mower mounted on the base of the frame in a transport position;
Figure 4 shows a plan view from the bottom of the quick connection of the lawn mower mounted on the base of the frame in the working position;
Figure 5 shows a plan view from the bottom of the quick connection of the lawn mower mounted on the base of the frame in the transport position;
Figure 6 shows a plan view from the bottom of the quick connection of the lawn mower mounted in the working position;
Figure 7 shows a plan view from the bottom of the quick connection of the lawn mower mounted in the transport position;
Figure 8 shows a plan view from the top of the quick connection of the lawn mower mounted in the working position;
Figure 9 shows a plan view from the top of the quick connection of the lawn mower mounted in the transport position;
Figure 10 shows a plan view from the side of the quick connection of the lawn mower mounted in the working position;
Figure 11 shows a plan view from the side of the quick connection of the lawn mower mounted in the transport position;
Figure 12 shows an enlargement C of Figure 10;
Figure 13 shows an enlargement D of Figure 11;
Figure 14 shows a plan view from the front of the quick connection of the lawn mower mounted in the working position;
Figure 15 shows a plan view from the front of the quick connection of the lawn mower mounted in the transport position;
Figure 16 shows an enlargement E of Figure 14;
Figure 17 shows an enlargement F of Figure 15;
Figure 18 shows a section view taken along lines XVIII-XVIII in Figure 12;
Figure 19 shows a section view taken along lines XIX-XIX in Figure 13;
Figure 20 shows an enlargement A of Figure 8;
Figure 21 shows an enlargement B of Figure 9;
Figure 22 shows a section view taken along lines XXII-XXII in Figure 14.

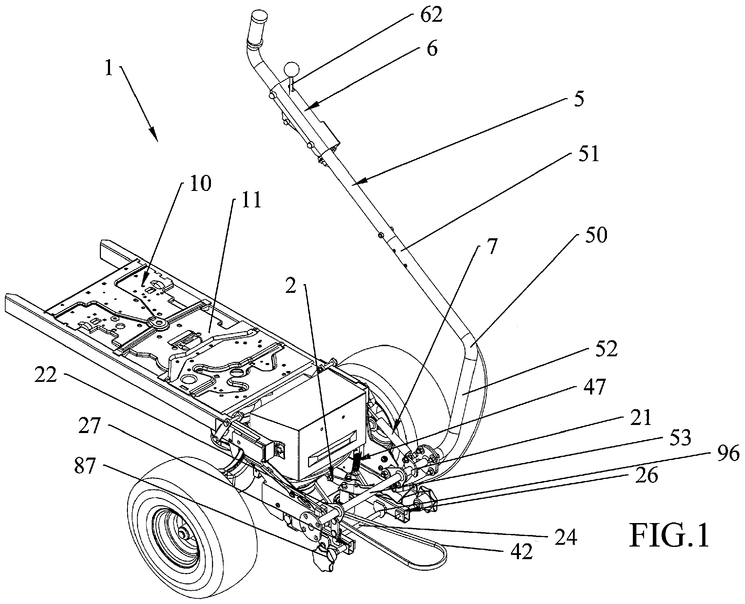

The figures listed above and in particular Figure 1 show a quick connection apparatus 2 for an accessory (not shown in the figures) of a lawn mower 1. The accessory of the lawn mower 1 may be comprised in a list shown by way of non-limiting example and comprising, for example, a brush, a shredder, a snowplough, a snow turbine, a further system of at least one blade of the lawn mower 1.

Said quick connection apparatus 2 is an interface of the lawn mower 1 for advantageously mounting said accessory in easily interchangeable and quick manner. Said quick connection apparatus 2 of the lawn mower 1 comprises a first lever 5, a second leverages apparatus 6, a power take off 3, a support frame 20, a lower interface frame 200, a hydraulic damper 7, a cam 9.

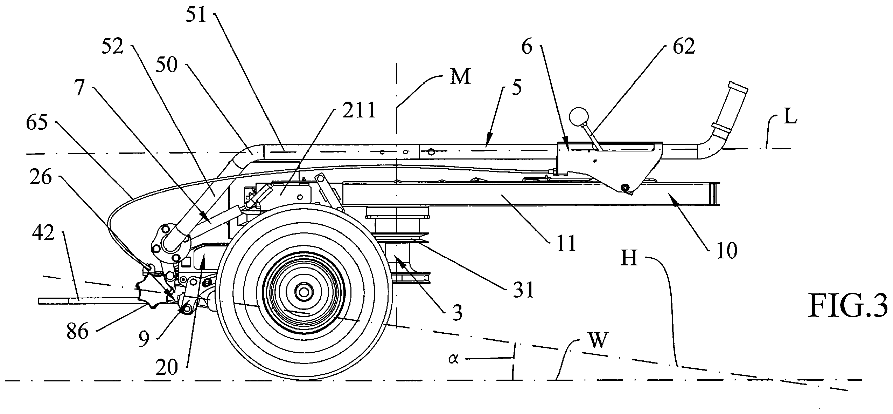

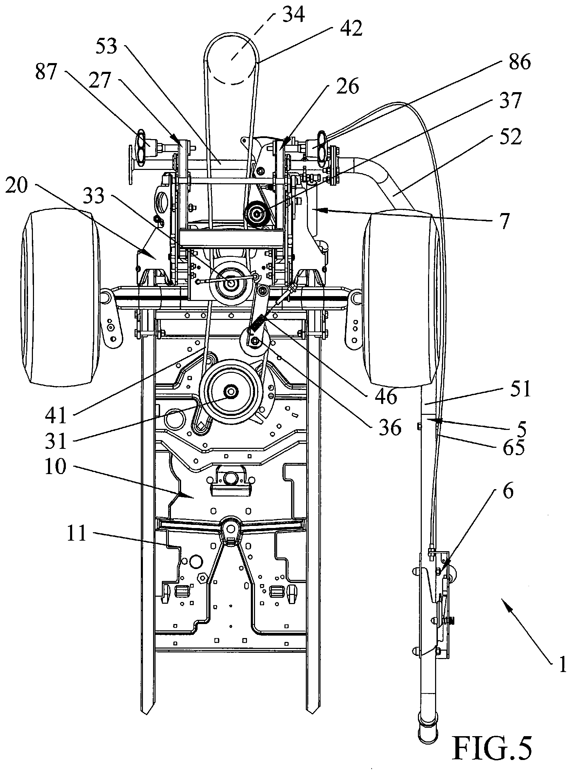

As shown in Figure 1-5, the support frame 20 of the quick connection apparatus 2 is mounted with a frontal portion of a base 11 of a frame 10 of the lawn mower 1 to facilitate the quick assembly of the frontal accessory of the lawn mower 2.

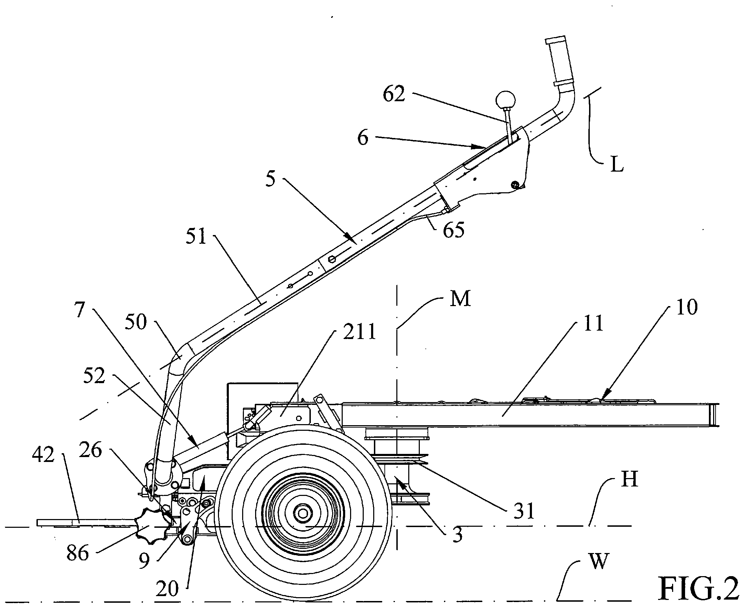

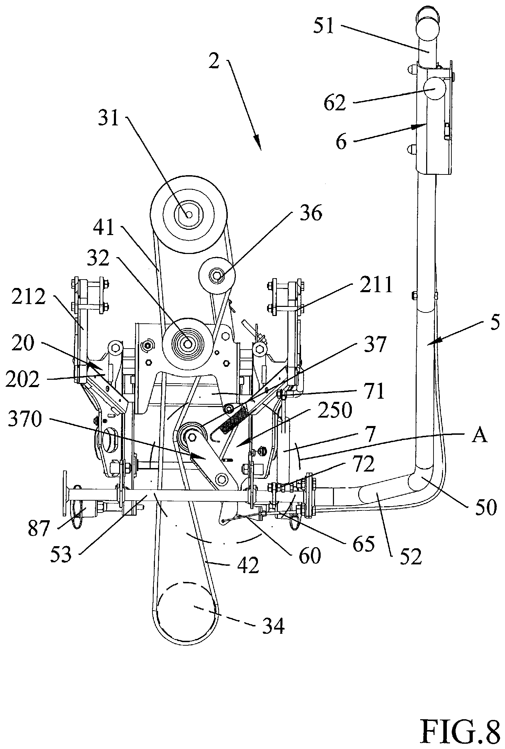

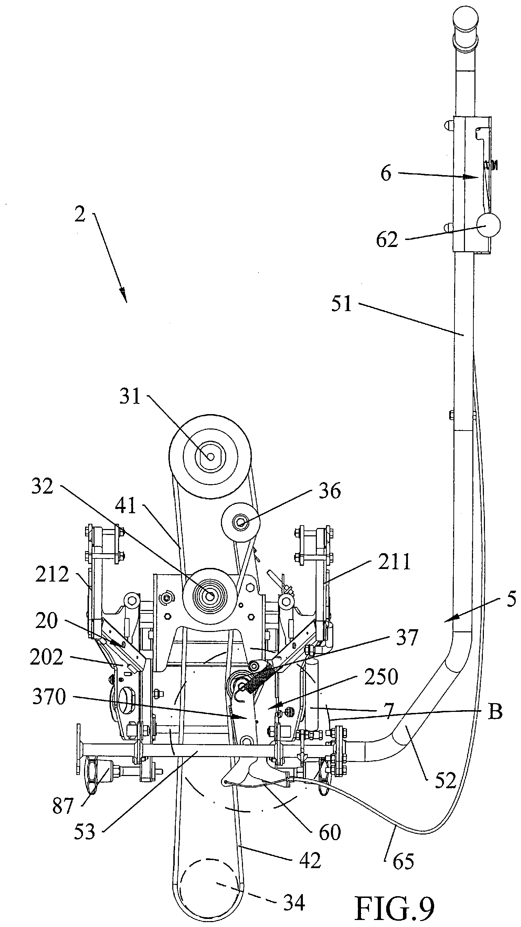

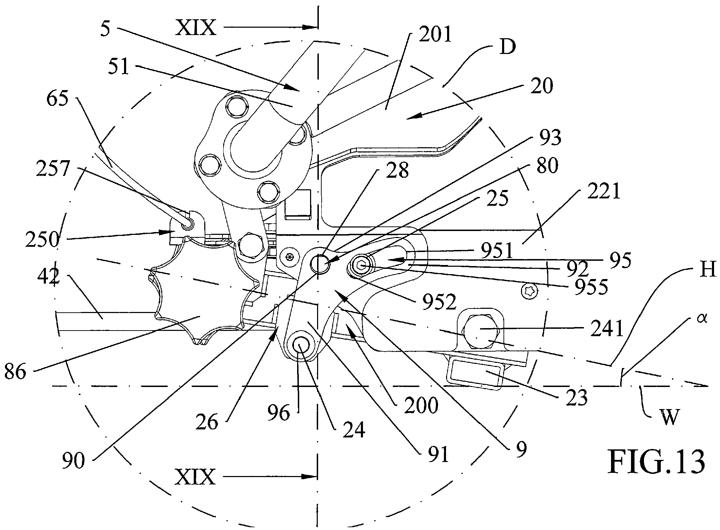

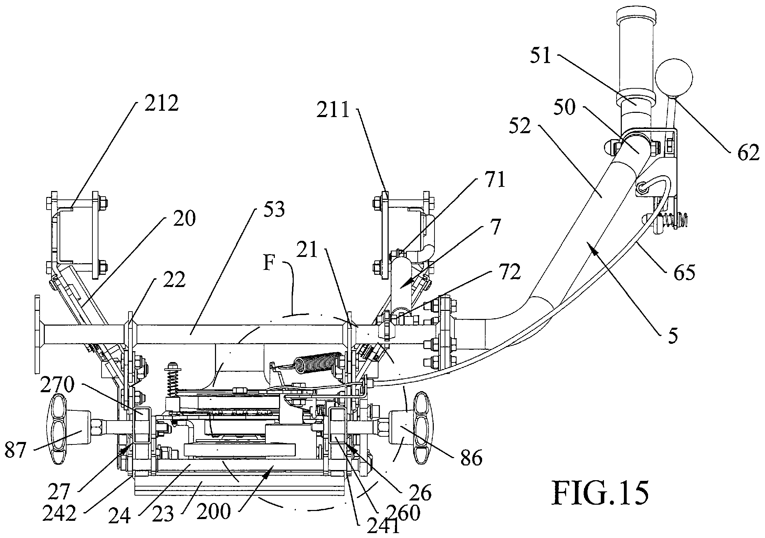

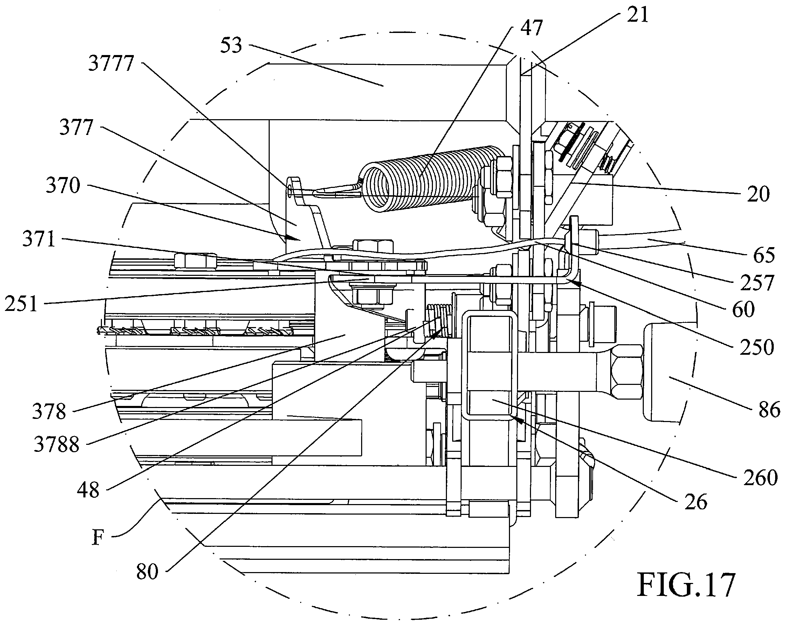

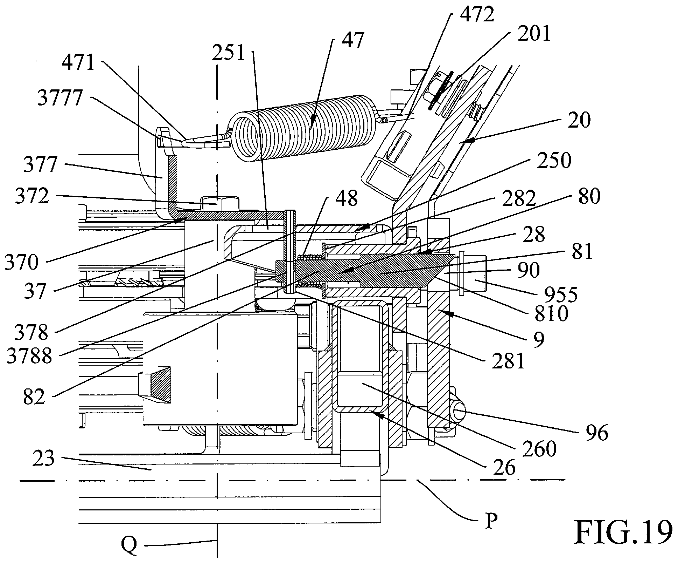

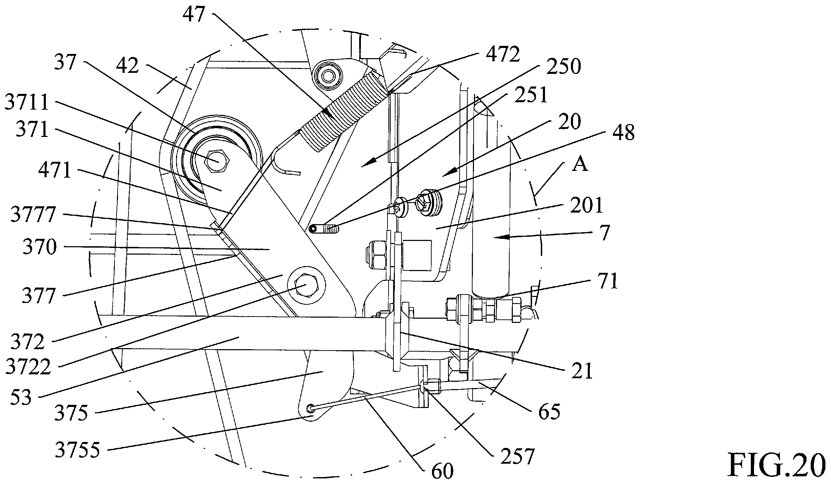

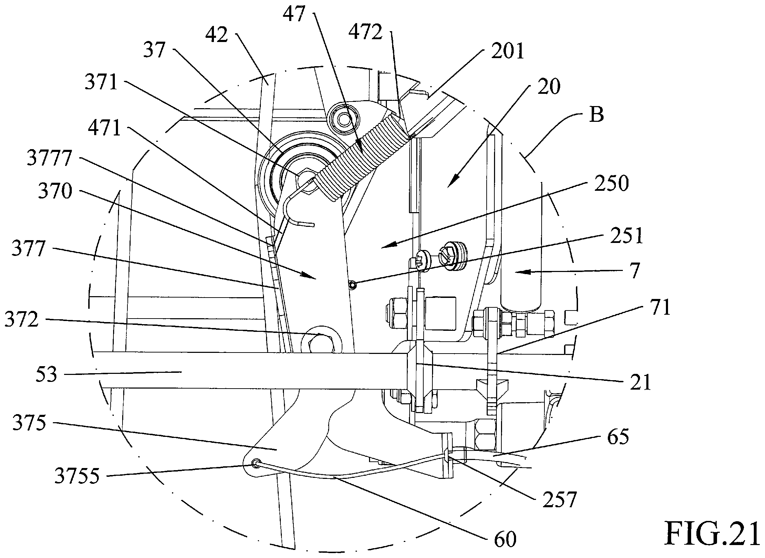

As shown in Figures 8-9, 14-21, said support frame 20 comprises a horizontal base portion 250, which is parallel to the ground (Figures 2-3, 10-13) to be mowed by means of the lawn mower 1 and defines a first longitudinal axis W, which is horizontal and parallel to the working surface.

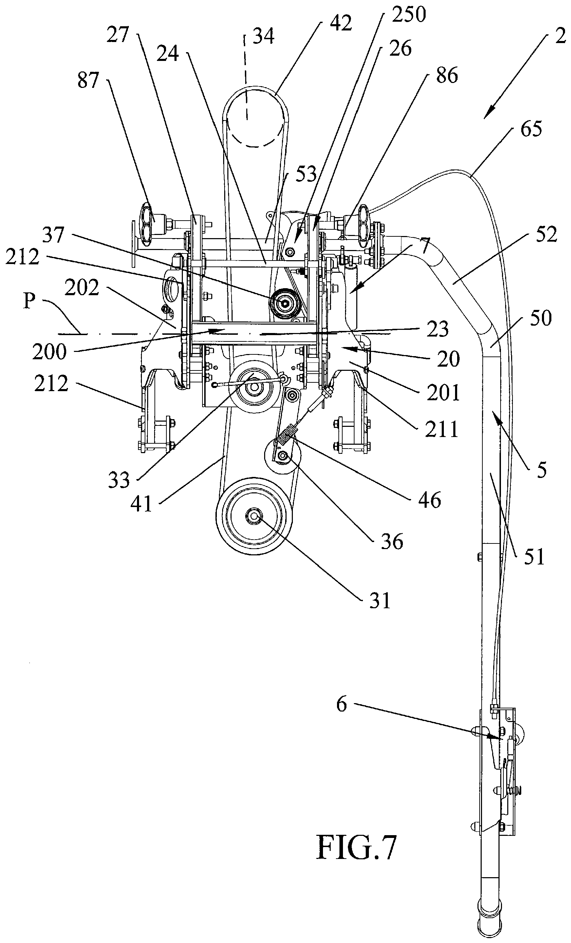

As shown in Figure 2-3, 6-9, 11-12, 14-15, 22, said support frame 20 comprises two upper walls 201-202 which are lifted upwards in vertical direction starting from the horizontal base portion 250.

Each of said two upper walls 201, 202 respectively comprises an upper extremity 211, 212, which is mounted separately from the base 11 of the frame 10 of the lawn mower 1, as shown in Figures 2-3.

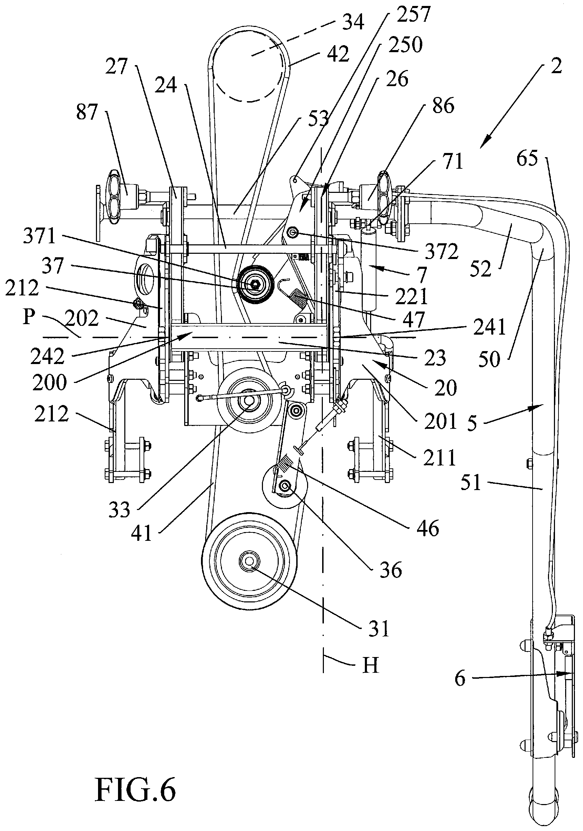

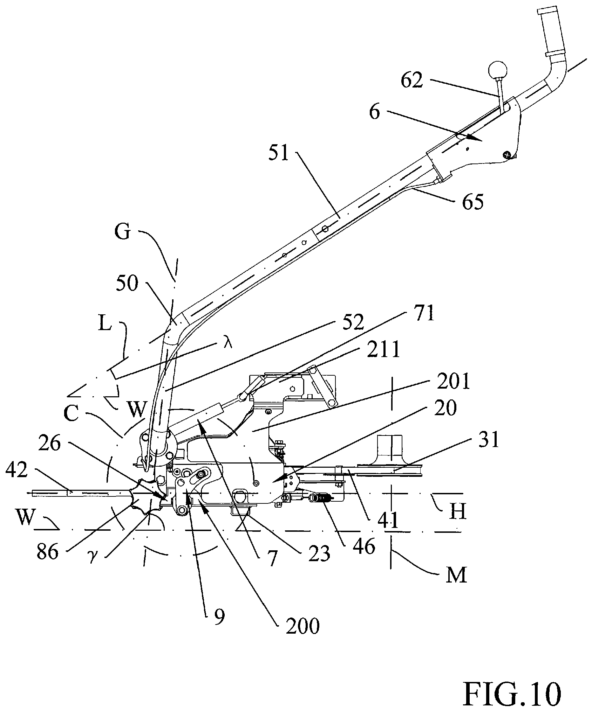

As shown in particular in Figures 10-13, said support frame 20 comprises two lower walls 221, 222 which descend downwards in vertical direction starting from the horizontal base portion 250. Each of said two lower walls 221, 222 comprises a pivotal housing 241, 242 to pivot a transversal bar 23 of said lower interface frame 200. Said pivotal housings 241, 242 define a transversal pivotal axis P (Figures 6-7). Said pivot axis P is perpendicular to the first longitudinal axis W. Said support frame 20 rotably mounts said lower interface frame 200 pivoting its transversal bar 23 thus allowing said lower interface frame 200 to rotate about the pivot axis P.

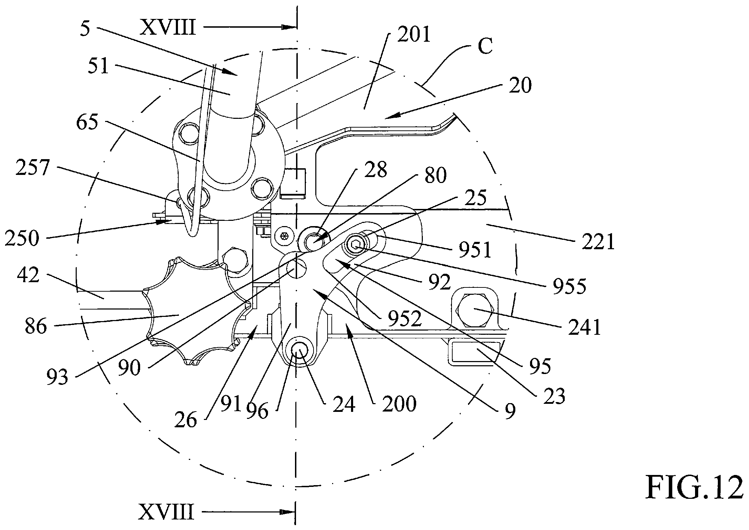

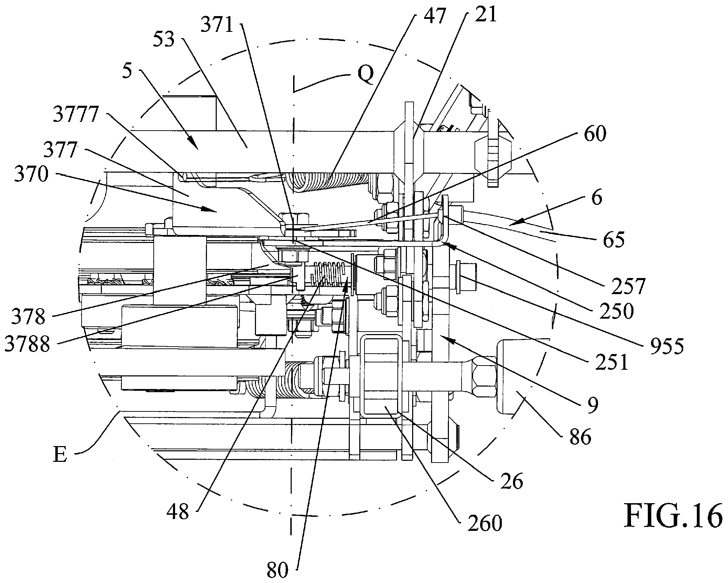

As shown in particular in Figures 12-13, a first lower wall 221 of said two lower walls 221 comprises a bond housing 25 in which a bond pin 955 is mounted in fixed manner (Figures 16-19).

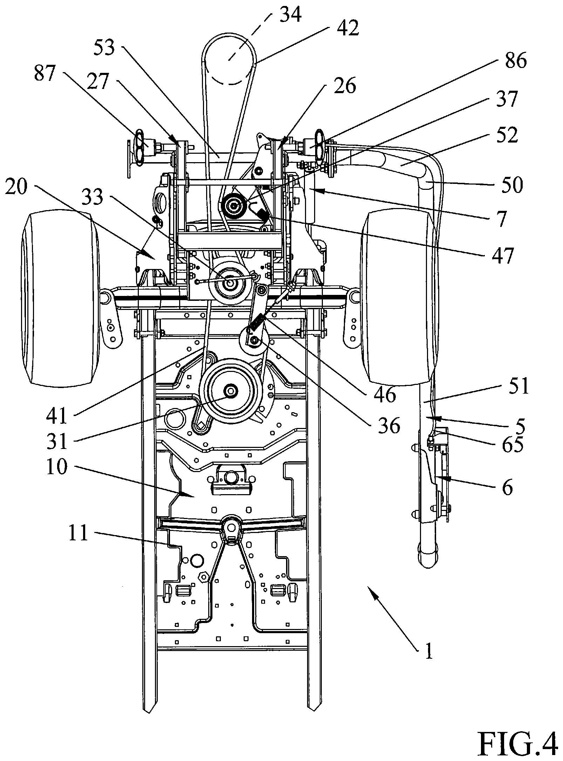

As shown in particular in Figures 4-7, 22, said lower interface frame 200 comprises said transversal bar 23 and another transversal bar 24 which join the two engaging longitudinal bars 26, 27 maintaining them parallel to each other. The two transversal bars 23, 24 advantageously reinforce the structure of the lower interface frame 200 supporting the two engaging longitudinal bars 26, 27.

As shown in particular in Figures 1, 14-19, 22, each of the two engaging longitudinal bars 26, 27 reciprocally comprise a through hole 260, 270. The two through holes 260, 270 of the engaging longitudinal bars 26, 27 are adapted to have two extensions of the frontal accessory (not shown in the figures) pass through them.

Respective extremities of the two longitudinal bars 26, 27 each mount a knob pin 86, 87 (Figures 1-3, 6-19, 22) to separately mount said two extensions of the frontal accessory, quickly and easily in integral manner with the lower interface frame 200 of the quick connection apparatus 2. Said knob pins 86, 87 are easy to maneuver.

The longitudinal length of the two longitudinal bars 26, 27 defines a second longitudinal axis H which lays on the same geometric plane as the first horizontal longitudinal axis W. The first longitudinal axis W and the second longitudinal axis H form a first angle α is comprised between 0 and 90 sexagesimal degrees. Preferably, the first angle α is comprised between 0 and 45 sexagesimal degrees to lift the lower interface frame 200 from a working position to at least one lifting position with respect to the working surface.

As shown in particular in Figures 2-3, 10-13, said lower interface frame 200 mounting the frontal accessory, makes said frontal accessory pass from a working position to at least one lifting position. The working position of the lower interface frame 200 is a horizontal and parallel position to the working surface and to the first longitudinal axis W so that the first longitudinal axis W has the first angle α of 0° with respect to the second longitudinal axis H. Said at least one lifting position of the lower interface frame 200 is a position which lifts the frontal accessory by inclining it upwards so that the first angle α is comprised between 0° and 90° with respect to the working surface and to the first longitudinal axis W. A multiplicity of lifting positions of the lower interface frame 200 may be fixed by varying the angle α from 0 to 90 sexagesimal degrees by making the lower interface frame 200 rotate about the pivot axis P.

As shown in particular in Figures 12-13, said cam 9 mounts the lower interface frame 200 with the support frame 20 by bonding the lifting angle α by means of a bond through opening 95 through which the bond pin 955 passes. Said cam 9 comprises a first portion 91 and a second portion 92.

The first portion 91 comprises a lower through hole 96 for mounting an extremity of said transversal bar 24 of the lower interface frame 200 and an upper through hole 90 for mounting a locking pin 80 of the support frame 20 in a transporting position of the quick connection apparatus 2 which corresponds to one of said at least one lifting position of the lower interface frame 200 to the first angle α comprised between 1 and 45 sexagesimal degrees which defines a transport angle.

The second portion 92 is shaped as an arc of circumference and comprises the arc-of-circumference-shaped bond through opening 95. Said bond through opening 95 slidingly mounts the bond pin 955 and is adapted to bond the rotary movement of the lower interface frame 200 about the pivot axis P so that the lower interface frame 200 can rotate about the pivot axis P from the first angle α of 0° corresponding to a first starting position of the bond pin 955 in contact with an upper extremity 951 of the bond through opening 95, up to a first lifting angle α, e.g. of 45° corresponding to an arrival position of the bond pin 955 in contact with a lower extremity 952 of the bond through opening 95.

The cam 9 comprises a curvilinear upper extremity 93 which interposes itself facing a blocking housing 28 of the support frame 20. Said blocking seat 28 slidingly mounts said locking pin 80. Said upper extremity 93 is adapted to lock the sliding of the locking pin 80 out of the locking housing 28 towards the inside of the through hole 90 and is adapted to make said locking pin 80 pass inside the through hole 90 of the cam 9 only when the quick connection apparatus 2 is in the transport position. The curvilinear shape of the upper extremity 93 depends on the shape of the bond through opening 95 and on how much the first angle α can vary.

As shown in particular in Figures 1, 4-17, 22, the support frame 20 pivots said first lever 5 by means of two upper pivotal housings 21, 22.

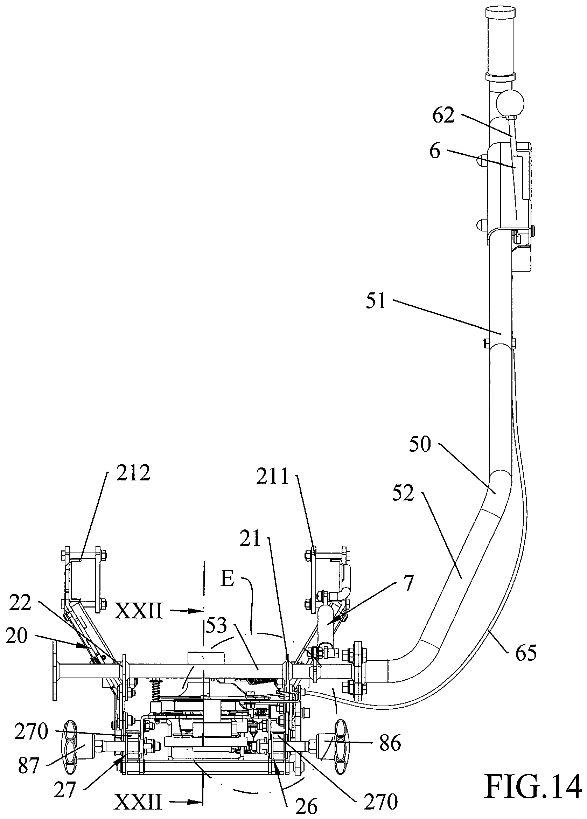

As shown in particular in Figure 2-3, 11-12, 14-15, said first lever 5 comprises a first longitudinal maneuverable portion 51 of a length which defines a first longitudinal axis of the lever L, a second longitudinal portion 52 of a length which defines a second longitudinal axis of the lever G, a curvilinear joining portion 50 between the first portion 51 and the second portion 52 and a third transversal portion 53 (Figure 14-15). The third transversal portion 53 is pivoted with the upper pivotal housings 21, 22 of the support frame 2.

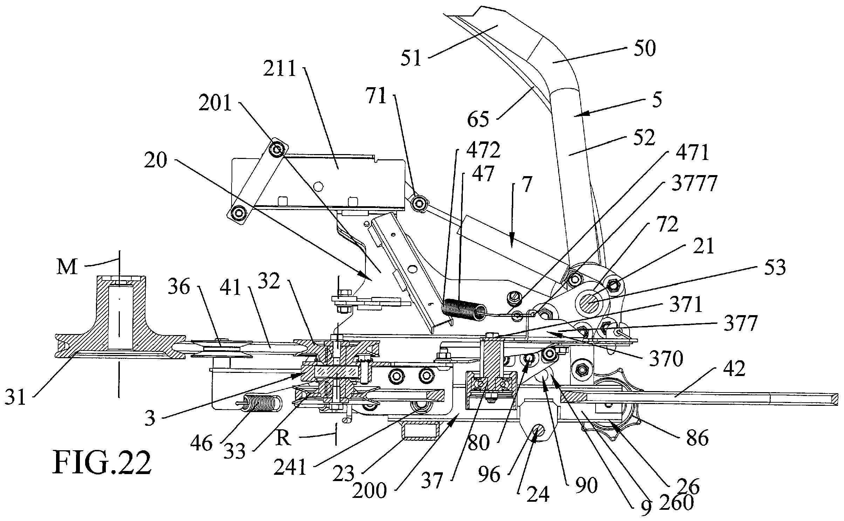

As shown in Figure 1-22 and in particular in Figure 22, said hydraulic damper 7 is a piston comprising a first extremity 71 and a second extremity 72. The first extremity 71 is mounted with the third portion 53 transversal to the first lever 5. The second extremity 72 is mounted with the first upper portion 211 of the support frame 20. The hydraulic damper 7 thus mounted advantageously reduces oscillations and vibrations which would otherwise extend to the first lever 5, and thus to the user handling it.

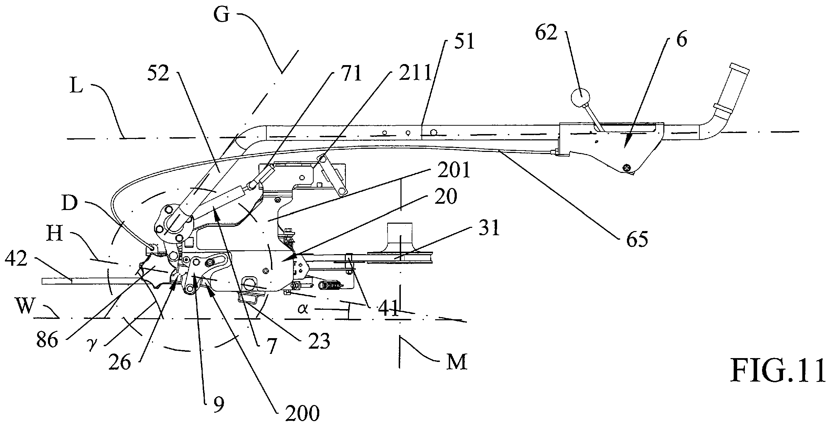

As shown in particular in Figures 10-11, the first lever 5 lifts the lower interface frame 200 making it rotate about the pivot axis P bonded by the pivot axis 955, making the lower interface frame 200 pass from the working position (Figure 10) to at least one lifted position, as for example the transport position of the quick connection apparatus 2 shown in Figure 11.

In the transporting position, the first portion 51 of the first lever 5 has the first longitudinal axis of the lever L parallel to the first longitudinal axis W so that the first longitudinal axis of the lever L forms a first lever angle λ of 0 sexagesimal degrees with respect to the first longitudinal axis W. The first lever angle λ is comprised between 0 and 80 sexagesimal degrees to allow easy use and increased handling ease of the first lever 5.

The second longitudinal axis of the lever G forms a second lever angle γ comprised between 10 and 90 sexagesimal degrees with respect to the first longitudinal axis W.

Advantageously, the transporting position of the quick connection apparatus 2 allows to transport it in the most compact manner possible by maintaining it locked in transport position.

As shown in particular in Figures 4-9, 22, said power take off 3 comprises a first pulley 31 keyed to a motor axis M and connected to a motor (not shown in the figures) which transmits a rotary movement to said first pulley 31. The power take off 3 further comprises a second pulley 32 and a third return pulley 33 keyed together on a return axis R. Said first 31 and second pulleys 32 are on a same first geometric plane and are connected by a first transmission belt 41 of said power take off 3. Said first transmission belt 41 is maintained taut by a first tensioner 36 which maintains a fixed position. Said fixed position of the first tensioner 36 can be calibrated by means of a first spring 46 connected by an extremity to the support frame 20. A fourth pulley 34 is keyed on an axis of the frontal accessory of the lawn mower 1. Said third 33 and fourth pulleys 34 are on a same second geometric plane and are connected in transmission by a second transmission belt 42 tensioned by a second tensioner 37. Said second tensioner 37 is adapted to pass from a first position to at least one second position. In said first position, the second tensioner 37 is adapted to maintain the second transmission belt 42 taut and to allow a transmission of power between the third pulley 33 and the fourth pulley 34 of the frontal accessory. In said at least one second position, the second tensioner 37 is adapted to loosen the tension of the second transmission belt 42 maintaining it sliding and is adapted not to allow the transmission of power between the third pulley 33 and the fourth pulley 34.

Said second tensioner 37 passes from said first to said at least one second position by means of the second leverages apparatus 6 moved by a second lever 62, as shown in Figures 2-22.

The second leverages apparatus 6 comprises said second lever 62 mounted over said first position 51 of the first lever 5 so as to be able to be maneuvered easily and safely by a user.

The second lever 62 is connected to a wire 60 and is adapted to pass from a first position to a second position. In said first position of the second lever 62, the second lever 62 pulls the wire 60 and corresponds to the first position of the second tensioner 37 to maintain said second belt 42 taut and allow the transmission of power from the third pulley 33 to the fourth pulley 34. In said second position of the second lever 62, the second lever 62 loosens the wire 60 and corresponds to said at least one second position of the second tensioner 37 to release the tension on said second belt 42 and not transmit power from the third 33 to the fourth pulley 34.

As shown in particular in Figures 16-22, said base portion 250 of the support frame 20 comprises a housing 257 in which to slidingly pass the wire 60 which joins the second lever 62 and a third lever 370.

Said third lever 370 comprises a horizontal flat portion comprising a first extremity 371, an intermediate portion 372 and a second extremity 375 opposite to the first extremity 371. Said third lever 370 comprises an upper wall 377 which is lifted upwards in vertical direction and a lower wall 378 which hangs downwards in vertical direction of the horizontal flat portion of the third lever 370.

The first extremity 371 of the horizontal flat portion of the third lever 370 rotably mounts the second tensioner 37 by means of a first pin 3711 arranged vertically.

The intermediate portion 372 of the horizontal flat portion of the third lever 370 is hinged by means of an intermediate pin 3722 arranged vertically in a through hole (not shown in the figures) of the base portion 250 of the support frame 20 and allows said third lever 370 to rotate about a pin axis Q identified by the intermediate pin 3722 so that the second tensioner 37 can pass from said first position to said at least one second position. The pin axis Q is vertical and perpendicular to the working surface, is perpendicular to the first longitudinal axis W and is perpendicular to the pivot axis P.

The second extremity 375 of the horizontal flat portion of the third lever 370 comprises a guide seat 3755 for slidingly mounting the wire 60 of the second leverages apparatus 6. The wire 60 is covered by a protection wire 65 which is mounted from the guide seat 3755 to the second lever 62. The protection wire 65 is mounted outside the first lever 5 and follows the profile thereof to decrease the dimensions and make safe the operation of the second leverages apparatus 6.

As shown in particular in Figure 16-19, the upper wall 377 of the first extremity 371 of the third lever 370 comprises a housing 3777 for mounting an extremity of a recall spring 47 adapted to recall the second tensioner 37 from the first position to said at least one second position. Said recall spring 47 comprises a first 471 and a second extremity 472. The first extremity 471 of the recall spring 47 is mounted with the seat 3777 of the upper wall 377 of the third lever 370. The second lever 472 of the recall spring 47 is mounted with the support frame 20 and is preferably mounted with the first upper wall 201 of the support frame 20.

The recall spring 47 goes from a first relaxing position, corresponding to the first position of the second tensioner 37, to a second working position of the recall spring 47, corresponding to the second position of the second tensioner 37.

The lower wall 378 of the second extremity 375 of the third lever 370 comprises a housing 3788 for mounting an inner extremity of a second portion 82 of said locking pin 80.

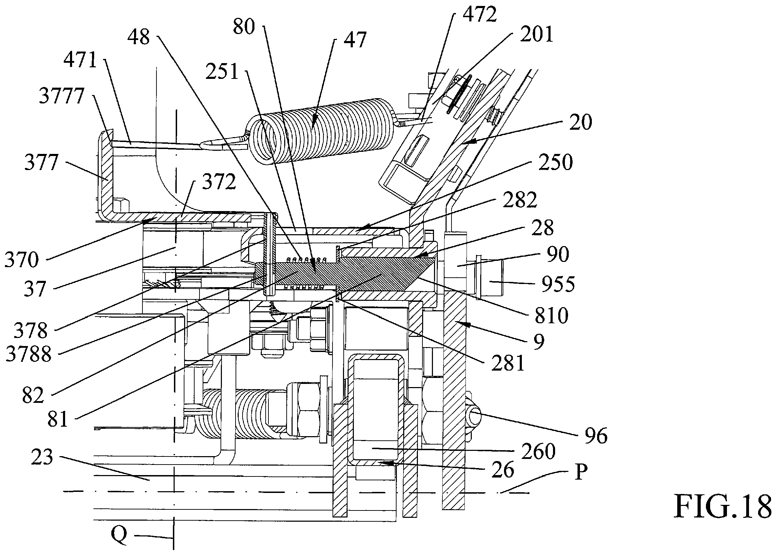

As shown in particular in Figure 18-19, said locking pin 80 is slidingly mounted in the blocking housing 28 of the support frame 20. Said locking pin 80 comprises a first portion 81 facing outwards and said second portion 82 facing towards the inside of the lawn mower 1.

The first portion 81 of the locking pin 80 comprises an oblique chamfer-shape external extremity comprising a chamfer oblique wall 810 facing downwards. Said chamfer oblique wall 810 is advantageously adapted to allow the release of the locking pin 80 from the through hole 90 of the cam 9 when the locking pin 80 passes from a locking position to an unlocking position. The locking position of the locking pin corresponds to the transport position of the quick connection apparatus 2 in which the locking pin 80 passes through the through hole 90 of the cam 9 to lock the first lever 5 and the second lever 62.

The second position 82 of the locking pin 80 mounts a counteracting spring 48 which pivots over said second portion 82 of the locking pin 80.

The first portion 81 of the locking pin 80 is slidingly mounted inside the blocking housing 28 of the support frame 20. The blocking housing 28 comprises two vertical stopping walls 281, 282 for said counteracting spring 48.

An inner extremity of the second portion 82 of the locking pin 80 e integrally mounted with the third lever 370 and in particular said second portion 82 is mounted with the housing 3788 of the third lever 370.

Said counteracting spring 48 mounted on the second portion 82 of the locking pin 80 is adapted to pass from a relaxing position to a compression position between the lower wall 378 of the third lever 370 and the vertical stopping walls 281, 282 of the blocking housing 28 of the support frame 20.

With regards to the operation of the quick connection apparatus 2, in a working position of the quick connection apparatus 2 the first lever 5 is in a lifted position and said second lever 62 is in the first position and pulls the wire 60 which pulls the second extremity 375 of the third lever 370 so that said third lever 370 rotates about the pin axis Q pushing the second tensioner 37 into the first position so as to maintain the second belt 42 taut and allow the transmission of power between the third pulley 33 and the fourth pulley 34, thus moving the frontal accessory. The recall spring 47 is in the first relaxing position. The locking pin 80 is maintained out of the through hole 90 of the cam 9 because the second extremity 82 of the locking pin 80 is pulled inwards, thus moving with the lower wall 378 of the third lever 370.

In a non-working position of the quick connection apparatus 2, the first lever 5 is in a lifted position and said second lever 62 is in the second position and releases the wire 60, which releases the second extremity 375 of the third lever 370 so that the third lever 370 rotates about the pin axis Q releasing the second tensioner in said at least one second position to not allow the transmission of power between the third pulley 33 and the fourth pulley 34, preventing the working of the frontal accessory, but allowing the movement of the first pulley 31 to continue mowing the grass. The recall spring 47 is in the second working position and pulls the upper wall 377 of the third lever 370 so that the third lever 370 rotates about the pin axis Q up to position the second tensioner 37 in said at least one second position. The lower wall 378 of the third lever 370 pushes the locking pin 80 into the blocking housing 28 of the support frame 20, but the locking pin 80 does not pass through the through hole 90 of the cam 9 as the upper extremity 93 blocks the passage of the locking pin 80. The counteracting spring 48 is in the working position against the lower wall 378 of the third lever 370 and against the vertical stopping walls 281, 282 of the blocking housing 28 of the support frame 20.

In the transport position of the quick connector apparatus 2, the first lever 5 is positioned so that the first portion 51 of the first lever 51 has the first longitudinal axis of the lever L parallel to the first longitudinal axis W and thus the first angle α is 0°. The first lever 5 rotates pivoted in the pin housings 21, 22 of the support frame 20 from the lifted position to the transporting position. The locking pin 80 is pushed by the counteracting spring 48 into the through hole 90 of the cam 9 and locks the first lever 5 and the second lever 62. The locking pin 80 locks the rotation of the third lever 370 because it maintains the lower wall 378 in a transport position. The recall spring 47 is in the second working position and maintains the upper wall 377 of the third lever 370 in transport position.

In order to pass from the transport position to either the working position or the non-working position, the first lever 5 is lifted into the lifting position and the chamfer oblique wall 810 of the locking pin 80 has a lead-in function and advantageously facilitates the release of the locking pin 80 from the through hole 90 of the cam 9. Said chamfer oblique wall 810 allows the sliding of inner walls of the through hole 90 of the cam 9 so that the locking pin 80 is stopped by the upper extremity 93 of the cam 9 in the non-working position or is extracted from the through hole 90 of the cam 9 passing in the working position.

The first lever 5 passes from the lifting position to the transporting position in advantageously damped manner by means of the hydraulic damper 7, so as to allow a sufficiently smooth and adequately slow sliding on the chamfer oblique wall 810 of the locking pin 80 in order to prevent jamming or failures between the locking pin 80 and the cam 9.

In order to mount a frontal accessory, it is sufficient and advantageously easy to insert two extensions of the frontal accessory in the respective two engaging longitudinal bars 26, 27 and to screw the respective knobs 86, 87, connect the second belt 42 onto the fourth pulley 34 and pass the second lever 62 from the second position to the first position to make the quick connection apparatus 2 pass from the non-working position to the working position, and vice versa.

Alternatively, it is possible to contemplate that the quick connection apparatus 2 is mounted on any position of the frame 10 comprised, for example, in a list of portions of frames 10 comprising a left portion, a right portion of a rear portion, a frontal portion of the frame 10 of the lawn mower 1.

Yet alternatively, the support frame 20 may be in one piece with the frame 10 of the lawn mower 1.

In one alternative, the bond through opening 95 of the cam 9 has a plurality of housings (not shown in the figures) to fix a plurality of lifting positions of the lower interface frame 200 by varying the first angle α from 0 to 90 sexagesimal degrees and making the lower interface frame 200 rotate about the pivot axis P and fixing the bond pin 955 with one of said plurality of housings.

According to an alternative, there are two hydraulic dampers 7 which mount the extremities of the transversal third portion 53 of the first lever 5 respectively with the first upper extremity 211 and with the second upper extremity 212 of the support frame 20.

Advantageously, the quick connection apparatus 2 for the frontal accessory of the lawn mower 1 can be easily and rapidly fitted and removed, rapidly and simply interchanged with other frontal accessories of the lawn mower, and is capable of rapidly and simply activating and deactivating the frontal accessory by means of the second lever 62 without influencing the operation of the first pulley 31 onto which the blades of the lawn mower 1 are keyed.

Advantageously, the frontal accessory of the lawn mower 2 can be simply and rapidly transported by means of the first lever 5, thus being simply and safely maneuverable without needing, each time, to disassemble the lawn mower 1 and the frontal accessory.

## Claims

1. Lawn mower (1) comprising a quick connection apparatus (2) for an accessory of the lawn mower (1), said quick connection apparatus (2) comprises a power take off (3) comprising a first pulley (31), a second pulley (32), a third pulley (33), a first tensioner (36), a second tensioner (37), a first belt (41) and a second belt (42), said first pulley (31) is keyed with a motor axis (M), said second pulley (32) and said third pulley (33) are keyed together with a return axis (R), said first pulley (31) and said second pulley (32) being linked through said first transmission belt (41), tension of said first belt (41) is maintained by said first tensioner (36), said third pulley (33) and a fourth pulley (34) keyed with an accessory axis are linked through said second transmission belt (42), tension of said second belt (42) is maintained by said second tensioner (37), said second tensioner (37) is suitable for passing from a first position to at least one second position, in said first position said second tensioner (37) is suitable for maintaining the tension of the second belt (42) and for providing a power transmission between said third pulley (33) and said fourth pulley (34), in said at least one second position said second tensioner (37) is suitable for releasing the tension of said second belt (42) and for not providing the power transmission between said third pulley (33) and said fourth pulley (34) **characterized in that** said second tensioner (37) is pivoted with a third lever (370) of the quick connection apparatus (2) linked to a second leverages apparatus (6), said third lever (370) is pivoted with a support frame (20), said third lever (370) comprises a first extremity (371) and a second extremity (375), said first extremity (371) of the third lever (370) engages a first extremity (471) of a recall spring (47), a second extremity (472) of the recall spring (47) is mounted with the support frame (20), said recall spring (47) is suitable for passing from a first relaxing position corresponding to the first position of the second tensioner (37) to a second working position of the recall spring (47) corresponding to said at least one second position of the second tensioner (37), said second extremity (375) of the third lever (370) engages a wire (60) of said second leverages apparatus (6), said wire (60) is linked with a second lever (62) of said second leverages apparatus (6), said second lever (62) is suitable for passing from a first position to a second position, said first position of the second lever (62) provides that the second lever (62) pulls the wire (60) and corresponding to the first position of the second tensioner (37), said second position of the second lever (62) provides that the second lever (62) loosens the wire (60) and corresponding to said at least one second position of the second tensioner (37), said quick connection apparatus (2) comprises a lower interface frame (200) hinged with said support frame (20), said lower interface frame (200) is suitable for rotating about a pivot axis (P) being transversal and being identified by pivotal housings (241, 242) of the support frame (20), said lower interface frame (200) being its rotation bounded by a bond pin (955) mounted with said support frame (20), said lower interface frame (200) comprising at least two engaging longitudinal bars (26, 27) for engaging prolongations of said accessory, said quick connection apparatus (2) comprises a cam (9) which mounts said lower support frame (200) with the support frame (20), said cam (9) comprising an upper through hole (90) suitable for slidably mounting a locking pin (80) of the support frame (20) in said at least one lifting position of the lower interface frame (200), said third lever (370) comprises a lower wall (378) which hangs downward in the vertical direction, said lower wall (378) of the third lever (370) mounts an extremity of a second portion (82) of said locking pin (80).

2. Lawn mower (1) according to claim 1, **characterized in that** said lower interface frame (200) passes from a working position to at least one lifting position by means of a first lever (5) hinged with said support frame (20).

3. Lawn mower (1) according to any one of the claims 1 or 2, **characterized in that** said cam (9) comprises a bond through opening (95) which slidably mounts said bond pin (955), said lower interface frame (200) rotating about said pivot axis (P) from a first angle (α) of 0° corresponding to a first starting position of the bond pin (955) in contact with an upper extremity (951) of the bond through opening (95), to a first lifting angle (α) comprising between 0° and 90°, corresponding to an arrival position of the bond pin (955) in contact with a lower extremity (952) of the bond through opening (95), said first angle (α) is comprised between a first longitudinal axis (W) which lays on a working plane and a second longitudinal axis (H) which is identified by a longitudinal length of at least one of two engaging longitudinal bars (26, 27).

4. Lawn mower (1) according to any one of the claims 1-3, **characterized in that** said cam (9) comprises an upper extremity (93) being curvilinear which interposes itself facing a blocking housing (28) of the support frame (20), said blocking housing (28) slidably mounts said locking pin (80).

5. Lawn mower (1) according to any one of the claims 2 or 4, **characterized in that** the quick connection apparatus (2) comprises at least one hydraulic damper (7) comprising a first extremity (71) and a second extremity (72), said first extremity (71) is mounted with the first lever (5) and said second extremity (72) is mounted with the support frame (20).

6. Lawn mower (1) according to any one of the claims 1-5, **characterized in that** said locking pin (80) mounts a counteracting spring (48) which is suitable for passing from a relaxing position to a compression position between the lower wall (378) of the third lever (370) and stopping walls (281, 282) of the blocking housing (28) of the support frame (20).

7. Lawn mower (1) according to any one of the claims 1-6, **characterized in that** said locking pin (80) comprises an external extremity of chamfer-shape comprising a chamfer oblique wall (810) facing downward and suitable for providing the exit of the locking pin (80) from the through hole (90) of the cam (9) when the locking pin (80) passes from a locking position to an unlocking position.

8. Lawn mower (1) according to any one of the claims 1-7, **characterized in that** the first lever (51) comprises a first portion (51) being manageable and being of a longitudinal length which identify a first longitudinal axis of the lever (L), a second portion (52) being of longitudinal length which identify a second longitudinal axis of the lever (G), a third portion (53) being transversal hinged with said support frame (20), said first portion (51) of the first lever (5) forms a lever angle (λ) of 0° with respect to a first longitudinal axis (W) lying on a working plane, in said at least one lifting position of the lower interface frame (200) which corresponds to a transport position in which said locking pin (80) penetrates into the through hole (90) of the cam (9).

9. Lawn mower (1) according to any one of the preceding claims, **characterized in that** the quick connection apparatus (2) comprises said support frame (20) separably mounted with a frame (10) of the lawn mower (1).

## Patentansprüche

1. Rasenmäher (1), der eine Schnellverbindungsvorrichtung (2) für ein Zubehörteil des Rasenmähers (1) aufweist, wobei die Schnellverbindungsvorrichtung (2) einen Nebenabtrieb (3), der eine erste Rolle (31), eine zweite Rolle (32), eine dritte Rolle (33), eine erste Spannvorrichtung (36), eine zweite Spannvorrichtung (37), einen ersten Riemen (41) und einen zweiten Riemen (42) aufweist, wobei die erste Rolle (31) auf einer Motorachse (M) formschlüssig angeordnet ist, die zweite Rolle (32) und die dritte Rolle (33) auf einer Rückführachse (R) zusammen formschlüssig angeordnet sind, wobei die erste Rolle (31) und die zweite Rolle (32) durch den ersten Transmissionsriemen (41) verbunden sind, die Spannung des ersten Riemens (41) von der ersten Spannvorrichtung (36) aufrechterhalten wird, wobei die dritte Rolle (33) und eine vierte Rolle (34), formschlüssig auf einer Nebenachse angeordnet, durch den zweiten Transmissionsriemen (42) verbunden sind und die Spannung des zweiten Riemens (42) von der zweiten Spannvorrichtung (37) aufrechterhalten wird, wobei die zweite Spannvorrichtung (37) dafür geeignet ist, aus einer ersten Position in mindestens eine zweite Position zu gelangen, wobei die zweite Spannvorrichtung (37) in der ersten Position dafür geeignet ist, die Spannung des zweiten Riemens (42) aufrechtzuerhalten und eine Energieübertragung zwischen der dritten Rolle (33) und der vierten Rolle (34) bereitzustellen, wobei die zweite Spannvorrichtung (37) in der mindestens einen zweiten Position dafür geeignet ist, die Spannung des zweiten Riemens (42) zu lösen und die Energieübertragung zwischen der dritten Rolle (33) und der vierten Rolle (34) nicht bereitzustellen,
**dadurch gekennzeichnet, dass**
die zweite Spannvorrichtung (37) mit einem dritten Hebel (370) der Schnellverbindungsvorrichtung (2) geschwenkt wird, der mit einer zweiten Hebelvorrichtung (6) verbunden ist, wobei der dritte Hebel (370) mit einem Trägerrahmen (20) geschwenkt wird, wobei der dritte Hebel (370) ein erstes äußerstes Ende (371) und ein zweites äußerstes Ende (375) aufweist, wobei das erste äußerste Ende (371) des dritten Hebels (370) an einem ersten äußersten Ende (471) einer Rückstellfeder (47) angreift, wobei ein zweites äußerstes Ende (472) der Rückstellfeder (47) an dem Trägerrahmen (20) befestigt ist, wobei die Rückstellfeder (47) dafür geeignet ist, aus einer ersten entspannten Position, die der ersten Position der zweiten Spannvorrichtung (37) entspricht, in eine zweite Arbeitsposition der Rückstellfeder (47) zu gelangen, die der mindestens einen zweiten Position der zweiten Spannvorrichtung (37) entspricht, wobei das zweite äußerste Ende (375) des dritten Hebels (370) an einem Draht (60) der zweiten Hebelvorrichtung (6) angreift, wobei der Draht (60) mit einem zweiten Hebel (62) der zweiten Hebelvorrichtung (6) verbunden ist, wobei der zweite Hebel (62) dafür geeignet ist, aus einer ersten Position in eine zweite Position zu gelangen, wobei die erste Position des zweiten Hebels (62) bewirkt, dass der zweite Hebel (62) den Draht (60) anzieht, und der ersten Position der zweiten Spannvorrichtung (37) entspricht und die zweite Position des zweiten Hebels (62) bewirkt, dass der zweite Hebel (62) den Draht (60) lockert, und der mindestens einen zweiten Position der zweiten Spannvorrichtung (37) entspricht, wobei die Schnellverbindungsvorrichtung (2) einen unteren Verbindungsrahmen (200) aufweist, der gelenkmäßig mit dem Trägerrahmen (20) verbunden ist, wobei der untere Verbindungsrahmen (200) dafür geeignet ist, sich um eine Schwenkachse (P) zu drehen, die quer verläuft und durch Schwenkgehäuse (241, 242) des Trägerrahmens (20) bestimmt ist, wobei der untere Verbindungsrahmen (200) durch einen an dem Trägerrahmen (20) befestigten Verbindungsstift (955) drehbegrenzt ist, wobei der untere Verbindungsrahmen (200) mindestens zwei angreifende Längsbalken (26, 27) zum Angreifen an Verlängerungen des Zubehörteils aufweist, wobei die Schnellverbindungsvorrichtung (2) ein Steuerflächenelement (9) aufweist, das den unteren Verbindungsrahmen (200) an dem Trägerrahmen (20) befestigt, wobei das Steuerflächenelement (9) eine obere Durchgangsöffnung (90) aufweist, die dafür geeignet ist, einen Verriegelungsstift (80) des Trägerrahmens (20) in der mindestens einen Hebeposition des unteren Verbindungsrahmens (200) zu befestigen, wobei der dritte Hebel (370) eine untere Wand (378) aufweist, die in die vertikale Richtung nach unten hängt, wobei die untere Wand (378) des dritten Hebels (370) ein äußerstes Ende eines zweiten Teils (82) des Verriegelungsstifts (80) befestigt.

2. Rasenmäher (1) nach Anspruch 1, **dadurch gekennzeichnet, dass** der untere Verbindungsrahmen (200) aus einer Arbeitsposition mittels eines ersten Hebels (5), der gelenkmäßig an dem Trägerrahmen (20) befestigt ist, in mindestens eine Hebeposition gelangt.

3. Rasenmäher (1) nach einem der Ansprüche 1 oder 2, **dadurch gekennzeichnet, dass** das Steuerflächenelement (9) eine Verbindungsdurchgangsöffnung (95) aufweist, die den Verbindungsstift (955) gleitbar befestigt, wobei der untere Verbindungsrahmen (200) sich um die Schwenkachse (P) aus einem ersten Winkel (α) von 0°, der einer ersten Startposition des Verbindungsstifts (955) in Kontakt mit einem oberen äußersten Ende (951) der Verbindungsdurchgangsöffnung (95) entspricht, in einen ersten Hebewinkel (α) dreht, der zwischen 0° und 90° beträgt, der einer Ankunftsposition des Verbindungsstifts (955) in Kontakt mit einem unteren äußersten Ende (952) der Verbindungsdurchgangsöffnung (95) entspricht, wobei der erste Winkel (α) zwischen einer ersten Längsachse (W), die in einer Arbeitsebene liegt, und einer zweiten Längsachse (H), die durch eine längsgerichtete Länge des mindestens einen der zwei angreifenden Längsbalken (26, 27) bestimmt ist, enthalten ist.

4. Rasenmäher (1) nach einem der Ansprüche 1 - 3, **dadurch gekennzeichnet, dass** das Steuerflächenelement (9) ein oberes äußerstes Ende (93) aufweist, das krummlinig ist und sich selbst zwischenordnet, wobei es einem Blockiergehäuse (28) des Trägerrahmens (20) zugewandt angeordnet ist, wobei das Blockiergehäuse (28) den Verriegelungsstift (80) gleitbar befestigt.

5. Rasenmäher (1) nach einem der Ansprüche 2 oder 4, **dadurch gekennzeichnet, dass** die Schnellverbindungsvorrichtung (2) mindestens eine hydraulische Dämpfungseinrichtung (7) aufweist, die ein erstes äußerste Ende (71) und ein zweites äußerstes Ende (72) aufweist, wobei das erste äußerste Ende (71) an dem ersten Hebel (5) befestigt ist und das zweite äußerste Ende (72) an dem Trägerrahmen (20) befestigt ist.

6. Rasenmäher (1) nach einem der Ansprüche 1 - 5, **dadurch gekennzeichnet, dass** der Verriegelungsstift (80) eine Gegenfeder (48) befestigt, die dafür geeignet ist, aus einer entspannten Position in eine zusammengedrückte Position zwischen der unteren Wand (378) des dritten Hebels (370) und Anschlagwänden (281, 282) des Blockiergehäuses (28) des Trägerrahmens (20) zu gelangen.

7. Rasenmäher (1) nach einem der Ansprüche 1 - 6, **dadurch gekennzeichnet, dass** der Verriegelungsstift (80) ein äußeres äußerstes Ende in Fasenform aufweist, das eine Fasenschrägwand (810) aufweist, die nach unten gewandt ist und dafür geeignet ist, den Austritt des Verriegelungsstifts (80) aus der
Durchgangsöffnung (90) des Steuerflächenelements (9) zu bewirken, wenn der Verriegelungsstift (80) aus einer Verriegelungsposition in eine Entriegelungsposition gelangt.

8. Rasenmäher (1) nach einem der Ansprüche 1 - 7, **dadurch gekennzeichnet, dass** der erste Hebel (51) einen ersten Teil (51), der betätigt werden kann und eine längsgerichtete Länge hat, die eine erste Längsachse des Hebels (L) bestimmt, einen zweiten Teil (52), der eine längsgerichtete Länge hat, die eine zweite Längsachse des Hebels (G) bestimmt, einen dritten Teil (53) aufweist, der gelenkmäßig quer mit dem Trägerrahmen (20) verbunden ist, wobei bei der erste Teil (51) des ersten Hebels (5) einen Hebelwinkel (λ) von 0° bezüglich einer ersten Längsachse (W) bildet, die in einer Arbeitsebene liegt, in der mindestens einen Hebeposition des unteren Verbindungsrahmens (200), die einer Transportposition entspricht, in der der Verriegelungsstift (80) in die Durchgangsöffnung (90) des Steuerflächenelements (9) eindringt.

9. Rasenmäher (1) nach einem der vorhergehenden Ansprüche, **dadurch gekennzeichnet, dass** die Schnellverbindungsvorrichtung (2) den Trägerrahmen (20) aufweist, der

## Revendications

1. Tondeuse à gazon (1) comprenant un dispositif de connexion rapide (2) pour un accessoire de la tondeuse à gazon (1), ledit dispositif de connexion rapide (2) comprend une prise de force (3) comprenant une première poulie (31), une deuxième poulie (32), une troisième poulie (33), un premier tendeur (36), un second tendeur (37), une première courroie (41) et une seconde courroie (42), ladite première poulie (31) étant liée à un axe de moteur (M), ladite deuxième poulie (32) et ladite troisième poulie (33) étant liées ensemble à un axe de rappel (R), ladite première poulie (31) et ladite seconde poulie (32) étant reliées par l'intermédiaire de ladite première courroie de transmission (41), la tension de ladite première courroie (41) est maintenue par ledit premier tendeur (36), ladite troisième poulie (33) et une quatrième poulie (34) liées à un axe d'accessoire sont reliées par l'intermédiaire de ladite seconde courroie de transmission (42), la tension de ladite seconde courroie (42) est maintenue par ledit second tendeur (37), ledit second tendeur (37) est adapté pour passer d'une première position à au moins une deuxième position, dans ladite première position ledit second tendeur (37) est adapté pour maintenir la tension de la seconde courroie (42) et pour fournir une transmission de force entre ladite troisième poulie (33) et ladite quatrième poulie (34), dans ladite au moins une deuxième position, ledit second tendeur (37) est adapté pour libérer la tension de ladite seconde courroie (42) et pour ne pas fournir la transmission de force entre ladite troisième poulie (33) et ladite quatrième poulie (34), **caractérisée en ce que** ledit second tendeur (37) est pivoté à l'aide d'un troisième levier (370) du dispositif de connexion rapide (2) relié à un second appareil de force de levier (6), ledit troisième levier (370) est pivoté à l'aide d'un cadre d'appui (20), ledit troisième levier (370) comprend une première extrémité (371) et une seconde extrémité (375), ladite première extrémité (371) du troisième levier (370) entre en prise avec une première extrémité (471) d'un ressort de rappel (47), une seconde extrémité (472) du ressort de rappel (47) est montée avec le cadre d'appui (20), ledit ressort de rappel (47) est adapté pour passer d'une première position de détente correspondant à la première position du second tendeur (37) à une seconde position opérationnelle du ressort de rappel (47) correspondant à ladite au moins une seconde position du second tendeur (37), ladite seconde extrémité (375) du troisième levier (370) entre en prise avec un câble (60) dudit second appareil de force de levier (6), ledit câble (60) est relié à un deuxième levier (62) dudit second appareil de force de levier (6), ledit deuxième levier (62) est adapté pour passer d'une première position à une seconde position, ladite première position du deuxième levier (62) faisant en sorte que le deuxième levier (62) tire le câble (60) et correspondant à la première position du second tendeur (37), ladite seconde position du deuxième levier (62) faisant en sorte que le deuxième levier (62) relâche le câble (60) et correspondant à ladite au moins une seconde position du second tendeur (37), ledit dispositif de connexion rapide (2) comprend un cadre d'interface inférieur (200) articulé avec ledit cadre d'appui (20), ledit cadre d'interface inférieur (200) est adapté pour tourner autour d'un axe de pivot (P) qui est transversal et identifié par des logements pivotants (241, 242) du cadre d'appui (20), ledit cadre d'interface inférieur (200) ayant sa rotation limitée par une broche de liaison (955) montée avec ledit cadre d'appui (20), ledit cadre d'interface inférieur (200) comprenant au moins deux barres longitudinales destinées à entrer en prise (26, 27) pour entrer en prise avec des prolongements dudit accessoire, ledit dispositif de connexion rapide (2) comprend une came (9) qui fixe ledit cadre d'appui inférieur (200) audit cadre d'appui (20), ladite came (9) comprenant un trou traversant supérieur (90) adapté pour fixer de manière coulissante une broche de verrouillage (80) du cadre d'appui (20) dans ladite au moins une position de levage du cadre d'interface inférieur (200), ledit troisième levier (370) comprend une paroi inférieure (378) qui est suspendue vers le bas suivant la direction verticale, ladite paroi inférieure (378) du troisième levier (370) fixe une extrémité d'une seconde partie (82) de ladite broche de verrouillage (80).

2. Tondeuse à gazon (1) selon la revendication 1, **caractérisée en ce que** ledit cadre d'interface inférieur (200) passe d'une position opérationnelle à au moins une position de levage au moyen d'un premier levier (5) articulé avec ledit cadre d'appui (20).

3. Tondeuse à gazon (1) selon l'une quelconque des revendications 1 ou 2, **caractérisée en ce que** ladite came (9) comprend une ouverture traversante de liaison (95) qui fixe de manière coulissante ladite broche de liaison (955), ledit cadre d'interface inférieur (200) tournant autour dudit axe de pivot (P) d'un premier angle (α) de 0° correspondant à une première position de départ de la broche de liaison (955) en contact avec une extrémité supérieure (951) de l'ouverture traversante de liaison (95), à un premier angle de levage (α) compris entre 0° et 90° correspondant à une position d'arrivée de la broche de liaison (955) en contact avec une extrémité inférieure (952) de l'ouverture traversante de liaison (95), ledit premier angle (α) est compris entre un premier axe longitudinal (W) qui repose sur un plan de travail et un second axe longitudinal (H) qui est identifié par une longueur longitudinale d'au moins une des deux barres longitudinales destinées à entrer en prise (26, 27).

4. Tondeuse à gazon (1) selon l'une quelconque des revendications 1 à 3, **caractérisée en ce que** ladite came (9) comprend une extrémité supérieure (93) curvilinéaire qui s'interpose en faisant face à un logement de blocage (28) du cadre d'appui (20), ledit logement de blocage (28) fixant de manière coulissante ladite broche de verrouillage (80).

5. Tondeuse à gazon (1) selon l'une quelconque des revendications 2 ou 4, **caractérisée en ce que** le dispositif de connexion rapide (2) comprend au moins un amortisseur hydraulique (7) comprenant une première extrémité (71) et une seconde extrémité (72), ladite première extrémité (71) est fixée avec le premier levier (5) et ladite seconde extrémité (72) est fixée avec le cadre d'appui (20).

6. Tondeuse à gazon (1) selon l'une quelconque des revendications 1 à 5, **caractérisée en ce que** ladite broche de verrouillage (80) fixe un ressort d'effet inverse (48) adapté pour passer d'une position de détente à une position de compression entre la paroi inférieure (378) du troisième levier (370) et des parois de butée (281, 282) du logement de blocage (28) du cadre d'appui (20).

7. Tondeuse à gazon (1) selon l'une quelconque des revendications 1 à 6, **caractérisée en ce que** ladite broche de verrouillage (80) comprend une extrémité externe ayant une forme en chanfrein comprenant une paroi oblique en chanfrein (810) se présentant de face vers le bas et adaptée pour fournir la sortie de la broche de verrouillage (80) à partir du trou traversant (90) de la came (9) quand la broche de verrouillage (80) passe d'une position de verrouillage à une position de déverrouillage.

8. Tondeuse à gazon (1) selon l'une quelconque des revendications 1 à 7, **caractérisée en ce que** le premier levier (51) comprend une première partie (51) pouvant être maniée et étant d'une longueur longitudinale qui identifie un premier axe longitudinal du levier (L), une deuxième partie (52) étant d'une longueur longitudinale qui identifie un second axe longitudinal du levier (G), une troisième partie (53) étant articulée de manière transversale audit cadre d'appui (20), ladite première partie (51) du premier levier (5) forme un angle de levier (λ) de 0° par rapport à un premier axe longitudinal (W) reposant sur un plan de travail, dans ladite au moins une position de levage du cadre d'interface inférieur (200) qui correspond à une position de transport dans laquelle ladite broche de verrouillage (80) pénètre à l'intérieur du trou traversant (90) de la came (9).

9. Tondeuse à gazon (1) selon l'une quelconque des revendications précédentes, **caractérisée en ce que** le dispositif de connexion rapide (2) comprend ledit cadre d'appui (20) fixé séparément à un cadre (10) de la tondeuse à gazon (1).
